# EUROPÄISCHE PATENTSCHRIFT

(11) **EP 3 589 458 B1**
(45) Veröffentlichungstag und Bekanntmachung des Hinweises auf die Patenterteilung: **29.05.2024**
(21) Anmeldenummer: 18706728.5
(22) Anmeldetag: 21.02.2018
(51) Int. Cl.: B25J 9/16, G05B 19/404

(54) **VORRICHTUNG ZUR BEWEGUNGSANALYSE UND ANTRIEBSVORRICHTUNG**
APPARATUS FOR ANALYSING MOVEMENT AND DRIVE APPARATUS
DISPOSITIF D'ANALYSE DE DÉPLACEMENT ET DISPOSITIF D'ENTRAINEMENT

(30) Priorität: 02.03.2017 DE 102017104335
(43) Veröffentlichungstag der Anmeldung: 08.01.2020
(73) Patentinhaber: Physik Instrumente (PI) GmbH & Co. KG, 76228 Karlsruhe (DE)
(72) Erfinder: MANKIN, Erik, 76227 Karlsruhe (DE); MÜLLERLEIHE, Christian, 76307 Karlsbad (DE); RUDOLF, Christian, 76307 Karlsbad (DE)
(74) Vertreter: Meissner Bolte Partnerschaft mbB
(86) Internationale Anmeldenummer: PCT/EP2018/054245
(87) Internationale Veröffentlichungsnummer: WO 2018/158120

(56) Entgegenhaltungen:
- EP-A1- 2 954 986
- EP-A2- 1 742 131
- EP-A2- 2 345 511
- WO-A1-2008/052234
- DE-A1-102009 042 014
- US-A1- 2013 234 642

## Beschreibung

Die Erfindung betrifft eine Vorrichtung zur Bewegungsanalyse einer Anordnung aus mehreren einer Plattform zugeordneten Körpern, von denen wenigstens einer mit einem Antrieb versehen ist, insbesondere vom Hexapoden-Typ oder vom Gelenkarm-Typ, mit Mitteln zur Schwingungsanalyse und/oder Kraftanalyse, sowie eine Antriebsvorrichtung einer solchen Anordnung, eine eine solche Antriebsvorrichtung aufweisende Bearbeitungsanordnung, sowie eine Simulation zur Bewegungsbahnsimulation einer Anordnung der genannten Art. Sie betrifft des Weiteren ein Verfahren zur Bewegungsanalyse einer Anordnung aus mehreren einer Plattform zugeordneten Körpern, von denen wenigstens einer mit einem Antrieb versehen ist, insbesondere vom Hexapoden-Typ oder vom Gelenkarm-Typ, sowie ein ein solches Verfahren umfassendes Antriebssteuerverfahren einer entsprechenden Anordnung, ein Steuerungsverfahren einer Bearbeitungsanordnung, und schließlich ein Simulationsverfahren zur Bewegungsbahnsimulation einer Anordnung der genannten Art.

Als Antrieb kann ein elektrischer Motor, insbesondere ein Linearmotor auf Piezo-Basis, vorgesehen sein, und bei der Bearbeitungsanordnung kann es sich um eine Werkzeugmaschine oder einen Industrieroboter handeln.

Anordnungen der hier genannten Art und hierauf aufbauende Bearbeitungsmaschinen und -systeme setzen sich zunehmend in computergestützten Produktionsprozessen durch. Ihre Durchsetzung erfordert die Gewährleistung einer hohen Positioniergenauigkeit und den weitest möglichen Ausschluss von Kollisionen, auch in einer komplexen und störbelasteten Fertigungsumgebung. Die entsprechenden Anforderungen steigen mit der Komplexität dieser Systeme und der Verkürzung der Taktzeiten stark an. Entsprechende Bewegungsanalysevorrichtungen und -verfahren sind daher in den letzten Jahren Gegenstand umfangreicher Entwicklungen gewesen. Zum hierbei geschaffenen Stand der Technik wird beispielhaft auf die EP 1 403 746 B1, EP 1 980 374 A2, US 2013/234642 A1 oder EP 2 954 986 A1 hingewiesen.

Die Aufgabe der vorliegenden Erfindung besteht darin, eine weiter verbesserte gattungsgemäße Vorrichtung zur Bewegungsanalyse, ein verbessertes Verfahren zur Bewegungsanalyse einer gattungsgemäßen Anordnung sowie hierauf aufbauende Antriebsvorrichtung oder Simulationsanordnung bzw. ein Antriebsverfahren oder Simulationsverfahren bereitzustellen, welche insbesondere eine bessere Anpassungsfähigkeit an verschiedenste und sich während des Betriebes ändernde Einsatzsituationen gewährleisten.

Diese Aufgabe wird in ihrem zentralen Vorrichtungsaspekt durch eine Vorrichtung mit den Merkmalen des Anspruchs 1 und in ihrem zentralen Verfahrensaspekt durch ein Verfahren mit den Merkmalen des Anspruchs 9 gelöst. Zweckmäßige Fortbildungen der Erfindung sind Gegenstand der rückbezogenen Ansprüche.

Die Erfindung schließt den Gedanken ein, die Bewegungsanalysevorrichtung modular aufzubauen, und zwar mit einem Schwingungsanalysemodul zur analytischen Bestimmung von Eigenschwingungsmoden der Körper und/oder der Plattform hinsichtlich wenigstens einer der folgenden Größen: Frequenz, Drehmittelpunkt des Drehanteils der Schwingungen, Drehachse einer Drehschwingung, Verschiebungsvektor einer kartesischen Schwingung, Amplitudenverhältnis der Schwingungen zueinander und/oder einem Kraftanalysemodul zur analytischen Bestimmung der auf einer vorbestimmten Bahnkurve auftretenden Beschleunigungskräfte und/oder Gewichtskräfte und/oder Drehmomente hinsichtlich der Körper und/oder der Plattform.

Erfindungsgemäß ist das Schwingungsanalysemodul und/oder das Kraftanalysemodul zur Schwingungs- bzw. Kraftanalyse auf der Basis von trägen Punktmassen ausgebildet.

In einer weiteren Ausführung ist das Schwingungsanalysemodul zur analytischen Bestimmung der Eigenschwingungen von Hexapoden und das Kraftanalysemodul als Beinlast-Modul zur analytischen Bestimmung der Beinlasten bzw. -kräfte der Beine von Hexapoden ausgebildet.

In einer weiteren zweckmäßigen Ausführung ist das Schwingungsanalysemodul zur analytischen Bestimmung der Eigenschwingungen eines Gelenkarms und das Kraftanalysemodul als Gelenklast-Modul zur Bestimmung der Gelenklasten bzw. -kräfte der Gelenke eines Gelenkarms ausgebildet.

Es wird weiterhin eine Antriebsvorrichtung einer Anordnung der in Rede stehenden Art bereitgestellt, deren Analyse- und Steuermittel eine Vorrichtung der oben erläuterten erfindungsgemäßen Art umfassen und zu einer Kraftanalyse vor Start eines Bewegungsablaufs und/oder zur Bewegungsanalyse während eines Bewegungsablaufs der Körper ausgebildet sind.

In einer Ausführung dieser Antriebsvorrichtung weisen Analyse- und Steuermittel eine Lastwechsel-Modellierungseinheit auf, die eingangsseitig mit dem Kraftanalysemodul und optional dem Schwingungsanalysemodul verbunden und zur Modellierung einer Lastfalländerung aufgrund einer entsprechenden Eingabe durch einen Bediener oder automatisch bei einem Lastwechsel in der Anordnung ausgebildet ist. In einer Ausführung kann ein Lastwechsel aufgrund einer Registrierung der aktuell aufgewendeten Antriebskraft bzw. von deren Zeitabhängigkeit einem bestimmten bekannten Lastwechsel-Typus zugeordnet werden.

Ein weiterer Ansatz der Lastwechselerkennung besteht darin, dass unbekannte Lasten aufgrund der von den Antriebselementen während eines Bewegungsablaufes aufgebrachten bzw. übertragenen Kräfte identifiziert werden und eine Modellierung initiiert wird, indem beispielsweise zugehörige Trägheitsdatensätze ermittelt werden.

In einer weiteren Ausführung der Antriebsvorrichtung weisen Analyse- und Steuermittel eine Speichereinheit zur Speicherung vorberechneter Parameter-Tabellen in Art von Lookup-Tables oder von Vorschriften zur Bestimmung variabler Regelungsparameter und eine mit der Speichereinheit verbundene Bewegungsbahn-Korrektureinheit zur Ausführung von Bewegungsbahnkorrekturen während des Bewegungsablaufs der Körper aufgrund der vorberechneten und gespeicherten Parameter-Tabellen auf.

In einer praktisch besonders attraktiven Ausführung ist die Antriebsvorrichtung ausgebildet als Antriebsvorrichtung eines parallelen oder hybriden Roboters mit mindestens einem Gelenkarm, welche einen Regler einschließt, der mit Ausgängen des Schwingungsanalysemoduls und des Kraftanalysemoduls verbunden ist und in dem eine Reglerparametrierung aufgrund von Ausgangsdaten dieser Module implementiert ist.

Mit einer solchen Antriebsvorrichtung, die zur Bewegung eines Werkzeugs relativ zu einem Werkstück dient, kann in vorteilhafter Weise eine Bearbeitungsanordnung, insbesondere eine Werkzeugmaschine oder eine Industrieroboter umfassende Anordnung, aufgebaut werden.

Im Rahmen der Erfindung wird des Weiteren eine Simulationsanordnung zur Bewegungsbahnsimulation einer Anordnung der vorstehend spezifizierten Art bereitgestellt, welche Ausgangswerte des Schwingungsanalysemoduls und des Kraftanalysemoduls zur Simulation von Bewegungsbahnen und wahlweise eines zugelassenen Bewegungsraumes der Körper bzw. der Plattform mit zugeordneten Körpern verarbeitet.

Unter Verfahrensaspekten gehört zur Erfindung das Konzept einer Bewegungsanalyse eine analytische Bestimmung von Eigenschwingungsmoden der Körper und/oder der Plattform hinsichtlich wenigstens eines der folgenden Größen: Frequenz, Drehmittelpunkt des Drehanteils der Schwingungen, Drehachse einer Drehschwingung, Verschiebungsvektor einer kartesischen Schwingung und Amplitudenverhältnis der Schwingungen zueinander in einem Schwingungsanalysemodul sowie eine analytische Bestimmung der auf einer vorbestimmten Bahnkurve auftretenden Beschleunigungskräfte und/oder Gewichtskräfte und/oder Drehmomente hinsichtlich der Körper/und oder der Plattform in einem Kraftanalysemodul umfasst.

Erfindungsgemäß wird die analytische Bestimmung der Eigenschwingungsmoden und/oder die analytische Bestimmung der Beschleunigungskräfte und/oder Gewichtskräfte und/oder Drehmomente auf der Basis von trägen Punktmassen ausgeführt.

In einer weiteren praktisch bedeutsamen Ausführung wird die analytische Bestimmung als Bestimmung der Eigenschwingungen von Hexapoden und die Kraftanalyse als analytische Bestimmung der Beinlasten bzw. -kräfte der Beine von Hexapoden ausgeführt.

Weiterhin wird ein Antriebssteuerverfahren einer Anordnung der oben spezifizierten Art bereitgestellt, welches das vorgenannte Verfahren einschließt und zu einer Kraftanalyse und/oder Schwingungsanalyse vor Start eines Bewegungsablaufs und/oder zur Bewegungsanalyse während eines Bewegungsablaufs der Körper ausgebildet ist.

In einer vorteilhaften Ausführung weist das Antriebssteuerverfahren eine Lastwechsel-Modellierung auf, die unter Nutzung von Ausgangsdaten des Kraftanalysemoduls und optional des Schwingungsanalysemoduls und aufgrund einer entsprechenden Eingabe durch einen Bediener oder automatisch bei einem Lastwechsel in der Anordnung ausgeführt wird.

Im Rahmen einer weiteren Ausführung des vorgeschlagenen Antriebssteuerverfahrens weist dieses eine Speicherung vorberechneter Parameter-Tabellen in Art von Lookup-Tables in einer Speichereinheit und eine Ausführung von Bewegungsbahnkorrekturen während des Bewegungsablaufs der Körper aufgrund der vorberechneten und gespeicherten Parameter-Tabellen auf.

Ein Antriebssteuerverfahren der hier spezifizierten Art ist von praktischer Bedeutung im Rahmen eines Steuerungsverfahrens einer Bearbeitungsanordnung, bei dem eine Relativbewegung eines Werkzeugs relativ zu einem Werkstück gesteuert wird, insbesondere in einer Werkzeugmaschine oder einer Industrieroboter umfassenden Bearbeitungsanordnung.

Schließlich umfasst die Erfindung auch ein Simulationsverfahren zur Bewegungsbahnsimulation einer Anordnung der in Rede stehenden Art, das die Schritte des vorgenannten Verfahrens zur Bewegungsanalyse und einen Simulationsschritt umfasst, welcher Ausgangswerte des Schwingungsanalysemoduls und des Kraftanalysemoduls zur Simulation von Bewegungsbahnen der Körper bzw. der Plattform mit zugeordneten Körpern verarbeitet.

Vorteile und Zweckmäßigkeiten der Erfindung ergeben sich aus der nachfolgenden Beschreibung von Ausführungsbeispielen und -aspekten der Erfindung unter Beachtung der anhängenden Figuren. Von diesen zeigen:
- Fig. 1: eine Prinzipskizze einer mit der erfindungsgemäßen Vorrichtung zur Bewegungsanalyse zu analysierenden und zu steuernden ersten beispielhaften Anordnung, in Art einer perspektivischen Darstellung,
- Fig. 2: eine Prinzipskizze einer mit der erfindungsgemäßen Vorrichtung zur Bewegungsanalyse zu analysierenden und zu steuernden zweiten beispielhaften Anordnung, in Art einer perspektivischen Darstellung,
- Fig. 3: eine Prinzipskizze einer mit der erfindungsgemäßen Vorrichtung zur Bewegungsanalyse zu analysierenden und zu steuernden dritten beispielhaften Anordnung, in Art einer perspektivischen Darstellung, und
- Fig. 4: eine schematische Darstellung einer Antriebsvorrichtung, die eine erfindungsgemäße Vorrichtung zur Bewegungsanalyse umfasst, gemäß einem Ausführungsbeispiel.

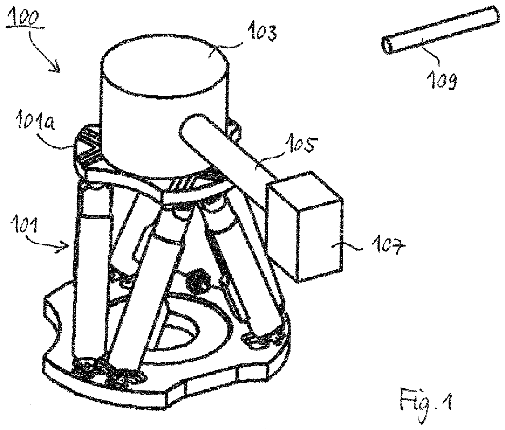

Fig. 1 zeigt als Ausführungsbeispiel der Erfindung eine Positionieranordnung 100, die einen Hexapoden 101 als Träger einer Vakuumkammer 103, einer Röntgenstreu-Auswerteelektronik 107 und eines die Vakuumkammer mit der Röntgenstreu-Auswerteelektronik verbindenden Tragarmes 105 umfasst, zusammen mit einer Röntgenstrahlquelle 109. In der Vakuumkammer befindet sich eine (nicht gezeigte) Probe, etwa ein schweres Maschinenteil, welche einer von der Röntgenstrahlquelle 109 ausgehenden Röntgenstrahlung zum Zweck der Materialanalyse ausgesetzt wird, und die von der Probe gestreute Röntgenstrahlung wird in der Röntgenstreu-Auswerteelektronik 107 ausgewertet.

Der Hexapode 101 trägt also eine Anordnung aus mehreren Lasten, und zwar als externe Lasten die Vakuumkammer 103, die in dieser befindliche Probe, die Röntgenstreu-Auswerteelektronik 107 und den Tragarm 105, sowie als interne Lasten eine bewegliche Plattform 101a des Hexapoden sowie seine eigenen (nicht gesondert bezeichneten) Beine.

Die internen Lasten, also die Plattform 101a und die Beine des Hexapoden, können in einer ersten Näherung und rechnerischen Betrachtung unberücksichtigt bleiben.

Die Vakuumkammer wirkt vornehmlich zentral durch ihre Schwerkraft, und bewirkt Trägheitskräfte vornehmlich bei Linearbeschleunigungen. Bei Hebelarm und Elektronik sind neben der Schwerkraft ist vor allen Dingen das Drehmoment relevant, dass durch die exzentrische Lage verursacht ist, welche eine Hebelwirkung zur Geltung kommen lässt. Ferner werden bei Tragarm und Auswertelektronik hier Massenträgheitsmomente bedeutsam, die in Erscheinung treten, wenn Tragarm und Auswerteelektronik um Hexapoden drehen und/oder Änderungen in ihrer Drehbewegung erfahren.

Der Hexapod werde durch einen Controller angesteuert, der bespielhaft manuell via Tastatur, oder über ein auf den Controller laufenden Programm kontrolliert wird. Alternativ kann der Controller Bewegungskommandos empfangen, die von einem Hostcomputer programmgesteuert generiert werden oder am Hostcomputer via Tastatur eingegeben werden.

Um die Lasten berücksichtigen zu können, müssen die auf der Plattform montierten Lasten der Firmware bekannt gemacht werden. Diese Daten können auf einem Datenträger des Controllers gespeichert werden, für jeden Körper einzeln übermittelt werden oder auch bereits rechnerisch als zusammengefasste kumulative Last übermittelt werden.

Der als "Trägheitsdatensatz" bezeichnete Inhalt der unten gezeigten Kästchen spezifiziert die jeweilige Last vollständig bezüglich ihrer hier relevanten Eigenschaften. Es sind Schwerkraft, durch Hebelwirkung verursachte Drehmomente, alle Trägheitskräfte und alle Kreiselkräfte, welche durch eine konstante Drehbewegung oder eine Winkelbeschleunigung in Erscheinung treten, vollständig beschrieben. Die hier durch die Trägheitsdatensätze, welche Trägheitstensoren verwenden, dargestellten physikalischen Eigenschaften können physikalisch auch äquivalent in anderer Weise dargestellt werden.
1. Trägheitsdatensatz der Vakuumkammer

| | | |
|---|---|---|
| **Trägheitstensor I (kg*m*m)** | | |
| **0.1** | **0.01** | **0.02** |
| **0.01** | **0.2** | **0.03** |
| **0.02** | **0.03** | **0.3** |
| **x/m y/m z/m Center of gravity** | | |
| **0.0** | **0.0** | **0.1** |
| **mass/kg** | | |
| **120** | | |

2. Trägheitsdatensatz der Probe in der Probenkammer

| | | |
|---|---|---|
| **Trägheitstensor I (kg*m*m)** | | |
| **3.3** | **0.11** | **0.55** |
| **0.11** | **3.3** | **0.0** |
| **0.55** | **0.0** | **3.3** |
| **x/m y/m z/m Center of gravity** | | |
| **0.0** | **0.0** | **0.2** |
| **mass/kg** | | |
| **220** | | |

3. Trägheitsdatensatz des Tragarms

| | | |
|---|---|---|
| **Trägheitstensor I (kg*m*m)** | | |
| **0.1** | | **0.0010.003** |
| **0.0010.2** | | **0.0** |
| **0.003 0.0** | | **0.2** |
| **x/m y/m z/m Center of gravity** | | |
| **0.0** | **0.8** | **0.2** |
| **mass/ kg** | | |
| **220** | | |

4. Trägheitsdatensatz der Auswerteelektronik

| | | |
|---|---|---|
| **Trägheitstensor I (kg*m*m)** | | |
| **0.2** | **0.1** | **0.4** |
| **0.1** | **0.2** | **0.0** |
| **0.4** | **0.0** | **0.2** |
| **x/m y/m z/m Center of gravity** | | |
| **0.0** | **1.6** | **0.2** |
| **mass/kg** | | |
| **90** | | |

Erfindungsgemäß können
- neue Trägheitsdaten der Firmware übermittelt werden
- Trägheitsdaten von der Firmware gespeichert werden
- Trägheitsdaten von der Firmware abgerufen werden

Gespeicherte Trägheitsdaten zur Rechnung hinzugenommen oder daraus entfernt werden.

Mit einer Anordnung der in Fig. 1 beispielhaft gezeigten Art lassen sich verschiedene Nachteile des Standes der Technik beheben bzw. vermeiden, und zwar insbesondere indem eine zugehörige Software (Firmware) wie folgt ausgestaltet ist:
Firmwareseitig ist ein Modul integriert, das solche Positionierungen ausschließt, in denen eine Überlast der Beine auftreten kann, oder eine Kippung auftreten kann.

Firmwareseitig ist ein Modul integriert, das Eigenschwingungen des Systems im Voraus erkennen kann und solche Positionierungen ausschließt, in denen es zu unerwünschten Eigenschwingungen kommen kann.

Firmwareseitig ist ein Modul integriert, das Regelungsparameter einer Weise anpasst, dass selbsterhaltende Schwingungen nicht auftreten und Einschwingvorgänge gedämpft werden.

Firmwareseitig ist ein Modul integriert, welches die Verfahrgeschwindigkeiten (Trajektorie) derart beschränkt, dass die auftretenden dynamischen Lasten in Summe mit allen anderen Lasten keine Überlast in den Beinen entstehen lassen.

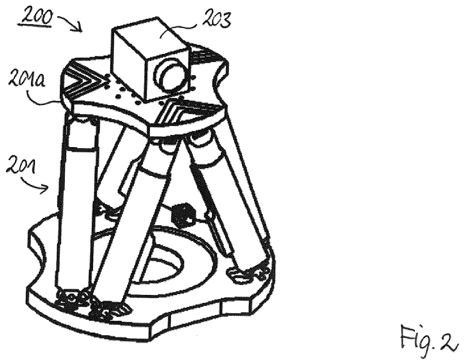

Fig. 2 zeigt in einer schematischen Darstellung als weiteres Ausführungsbeispiel eine Anordnung 200, und zwar einen Hexapoden 201 mit einer Plattform 201a, auf der ein Probekörper 203 montiert ist, der durch die Hexapoden-Plattform 201a bewegt wird. Diese Anordnung ist Gegenstand einer hochgradig dynamischen, präzisen Bewegungssimulation, wobei der Probekörper 203 einer vorgegebenen Trajektorie (Bahnkurve) folgen soll.

Definierte Bewegungssimulationen können dazu dienen, technische Geräte einer Dauerbeanspruchung durch seine schüttelnde Bewegung zu unterziehen, oder auch dazu, Bildstabilisierungsalgorithmen zu testen und zu validieren, Beschleunigungssensoren zu validieren und dergleichen. Bildstabilisierungsalgorithmen spielen beispielsweise in Konsumartikeln wie Fotoapparaten und Camcordern eine Rolle. Weiter gibt es Anwendungen, in denen die Orientierung einem Target folgen soll, etwa, indem eine Laserquelle hochdynamisch orientiert werden muss.

Wie im vorstehenden Beispiel werden die internen Lasten, also die der Plattform und der Beine, aus der Betrachtung ausgeklammert.

Wie ersichtlich, gehen von dem Probenkörper folgende Kräfte aus:
1. Zentral von seinem Schwerpunkt nach unten wird seine Gewichtskraft wirksam
2. Entgehen einer kartesischen Beschleunigung treten Trägheitskräfte auf
3. Durch Drehbewegungen und Drehbeschleunigungen treten Kreiselkräfte auf, welche über die Hexapodbeine abgeleitet werden müssen.

Der Hexapod werde durch einen Controller angesteuert; diesem ist eine gewünschte Trajektorie hinterlegt, oder die Bahn wird über einen Hostcomputer gesteuert.

Im Fall dass eine Anwendung eine Bewegungssteuerung im Rahmen einer Targetverfolgung benötigt, wird dies aktuell im Rahmen eines geschlossenen Regelkreises im Verbund mit entsprechenden Sensoren bewirkt.

Um die Lasten berücksichtigen zu können, müssen die auf der Plattform montierten Lasten der Firmware bekannt gemacht werden. Diese Daten können auf einem Datenträger des Controllers gespeichert werden, für jeden Körper einzeln übermittelt werden oder auch bereits rechnerisch als zusammengefasste kumulative Last übermittelt werden.

Der als "Trägheitsdatensatz" bezeichnete Inhalt der folgenden Kästchen spezifiziert auch hier die jeweilige Last vollständig bezüglich ihrer hier relevanten Eigenschaften. Es sind Schwerkraft, durch Hebelwirkung verursachte Drehmomente, alle Trägheitskräfte und alle Kreiselkräfte, welche durch eine konstante Drehbewegung oder eine Winkelbeschleunigung in Erscheinung treten, vollständig beschrieben. Die durch die Trägheitsdatensätze, welche Trägheitstensoren verwenden, dargestellten physikalischen Eigenschaften können physikalisch auch äquivalent in anderer Weise dargestellt werden.

Der Trägheitsdatensatz des Probenkörpers habe folgende Darstellung

| **Trägheitstensor I (kg*m*m)** | | |
|---|---|---|
| **0.1** | **0.11** | **0.02** |
| **0.11** | **0.2** | **0.03** |
| **0.02** | **0.03** | **0.2** |

| **x/m y/m z/m Center of gravity** | | |
|---|---|---|
| **0.0** | **0.0** | **0.1** |
| **mass/kg** | | |
| **2** | | |

Erfindungsgemäß können
- neue Trägheitsdaten der Firmware übermittelt werden,
- Trägheitsdaten von der Firmware gespeichert werden,
- Trägheitsdaten von der Firmware abgerufen werden.

### Gespeicherte Trägheitsdaten zur Rechnung hinzugenommen oder daraus entfernt werden

Mit einer Anordnung der in Fig. 2 beispielhaft gezeigten Art lassen sich verschiedene Nachteile des Standes der Technik beheben bzw. vermeiden, und zwar insbesondere indem eine zugehörige Software (Firmware) wie folgt ausgestaltet ist:
Firmwareseitig ist ein Modul integriert, das Parameter der Trajektorie derart anpasst, dass bei größtmöglicher Dynamik die Posenabweichungen gering hält.

Firmwareseitig ist ein Modul integriert, das Eigenschwingungen des Systems im Voraus erkennen kann und die Bahnsteuerung derart abwandelt, dass Schwingungsanregungen bei Bedarf vermieden werden.

Firmwareseitig ist ein Modul integriert, das Regelungsparameter einer Weise anpasst, dass selbsterhaltende Schwingungen nicht auftreten und Einschwingvorgänge gedämpft werden und die Bahntreue erhöht wird. Insbesondere können die auf Basis der Trägheitsdaten und er Trajektorie ermittelten schwankenden Beinlasten als Vorsteuerung in der Beinlängenregelung verwendet werden.

Firmwareseitig ist ein Modul integriert, welches die Verfahrgeschwindigkeiten (Trajektorie) derart beschränkt bzw. anpasst, dass die auftretenden dynamischen Lasten in Summe mit allen anderen Lasten keine Überlast in den Beinen entstehen lassen.

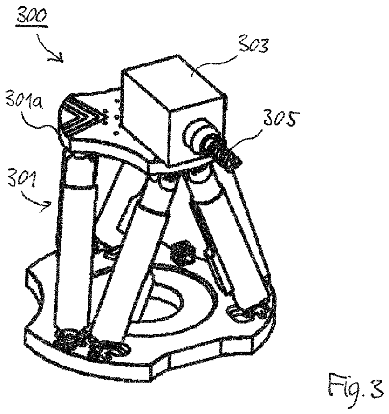

Fig. 3 zeigt eine weitere beispielhafte Anordnung 300, deren Kernstück wiederum ein Hexapode 301 mit einer beweglichen Plattform 301a ist. Auf dieser ist eine Werkzeughalterung 303 angebracht, in die ein Werkzeug 305, etwa zur spanabhebenden Bearbeitung eines (nicht gezeigten) Werkstücks, eingespannt ist. Bei einem Werkzeugwechsel ergibt sich eine andere Last-Konstellation für den Hexapoden.

Die auf den Hexapoden wirkenden Kräfte bewirken hier aufgrund der Eigenelastizität des Hexapoden eine Bahnabweichung, die sich nachteilig auf die Genauigkeit des Werkstücks auswirkt. Bei den einwirkenden Kräften handelt es sich unter anderem um Gewichtskräfte und Massenträgheitskräfte. Diese Kräfte wiederum hängen von den von der Plattform zu tragenden Lasten ab.

Das jeweilige Werkzeug beeinflusst die Resonanzfrequenz des Systems Hexapod-Werkzeug. Die Kenntnis der Resonanzfrequenz kann genutzt werden, um eine Bahnsteuerung zu variieren und Regelungsparameter anzupassen, ggf. auch vor Beginn der Bewegung unter Ausnutzung von look-up-Tables, so dass die Resonanzfrequenz des Systems möglichst wenig angeregt wird und damit dem Entstehen von sogenannten Rattermarken auf dem Werkstück entgegengewirkt wird.

Wird ein spanabgebendes Werkzeug, wie etwa ein Fräskopf oder einer Schneide, spanabhebend an einem Werkstück vorbeigeführt, dann teilt sich die Bahn des Werkzeuges dem Werkstück mit. Falls das Werkzeug senkrecht zur Bewegungsrichtung und in Richtung zum Werkstück vibriert, also eine Schwingung ausführt, dann teilen sich diese Schwingungen dem Werkstück in Gestalt von Rattermarken mit.

Um die Lasten berücksichtigen zu können, werden die auf die Plattform montierten Lasten der Firmware übermittelt. Diese Daten können auf einem Datenträger gespeichert werden, für jeden Körper einzeln übermittelt werden oder auch bereits rechnerisch als eine einzelne Last übermittelt werden.

Der "Trägheitsdatensatz" beschreibt wiederum die jeweilige Last vollständig bezüglich ihrer hier relevanten Eigenschaften. Es sind Schwerkraft, durch Hebelwirkung verursachte Drehmomente, alle Trägheitskräfte und alle Kreiselkräfte, welche durch eine konstante Drehbewegung oder eine Winkelbeschleunigung in Erscheinung treten, vollständig beschrieben. Die hier durch die Trägheitsdatensätze dargestellten physikalischen Eigenschaften können auch äquivalent in anderer Weise dargestellt werden.

Der Trägheitsdatensatz eines Werkzeughalters 303 kann in folgender Weise beschrieben werden:

| **Trägheitstensor/(kg*m*m)** | | |
|---|---|---|
| **0.1** | **0.11** | **0.02** |
| **0.11** | **0.2** | **0.03** |
| **0.02** | **0.03** | **0.2** |

| **x/m y/m z/m Center of gravity** | | |
|---|---|---|
| **0.0** | **0.0** | **0.1** |
| **mass/kg** | | |
| **2** | | |

Der Trägheitsdatensatz eines Werkzeuges 305 kann in folgender Weise beschrieben werden:

| **Trägheitstensor/(kg*m*m)** | | |
|---|---|---|
| **0.1** | **0.11** | **0.02** |
| **0.11** | **0.2** | **0.03** |
| **0.02** | **0.03** | **0.2** |

| **x/m y/m z/m Center of gravity** | | |
|---|---|---|
| **0.0** | **0.0** | **0.1** |
| **mass/kg** | | |
| **2** | | |

Erfindungsgemäß können die Trägheitsdaten aller Werkzeuge sowie aller Werkzeughalter vorgehalten werden, und bei jedem Werkzeugwechsel aktiviert oder deaktiviert werden.

Erfindungsgemäß können
- neue Trägheitsdaten der Firmware übermittelt werden,
- Trägheitsdaten von der Firmware gespeichert werden,
- Trägheitsdaten von der Firmware abgerufen werden,
- gespeicherte Trägheitsdaten zur Rechnung hinzugenommen oder daraus entfernt werden.

Mit einer Anordnung der in Fig. 3 beispielhaft gezeigten Art lassen sich verschiedene Nachteile des Standes der Technik beheben bzw. vermeiden, und zwar insbesondere indem eine zugehörige Software (Firmware) wie folgt ausgestaltet ist:
Firmwareseitig ist ein Modul integriert, das Parameter der Trajektorie derart anpasst, dass bei größtmöglicher Dynamik die Posenabweichungen gering hält.

Firmwareseitig ist ein Modul integriert, das Eigenschwingungen des Systems im Voraus erkennen kann und die Bahnsteuerung derart abwandelt, dass Schwingungsanregungen bei Bedarf vermieden werden.

Firmwareseitig ist ein Modul integriert, das Regelungsparameter einer Weise anpasst, dass selbsterhaltende Schwingungen nicht auftreten und Einschwingvorgänge gedämpft werden und die Bahntreue erhöht wird. Insbesondere können die auf Basis der Trägheitsdaten und er Trajektorie ermittelten schwankenden Beinlasten als Vorsteuerung in der Beinlängenregelung verwendet werden.

Firmwareseitig ist ein Modul integriert, welches die Verfahrgeschwindigkeiten (Trajektorie) derart beschränkt, dass die auftretenden dynamischen Lasten in Summe mit allen anderen Lasten keine Überlast in den Beinen entstehen lassen.

Firmwareseits ist ein Modul integriert, das neben den Gewichtskräften und Trägheitsdaten, die sich aus den Trägheitsdatensätzen ergibt, auch noch jene Kräfte und Momente hinzunimmt, die sich infolge des Bearbeitungsprozesses selbst ergeben, etwa den Widerstand welcher der Fräskopf durch das Werkstück bei der Spanabhebung erfährt.

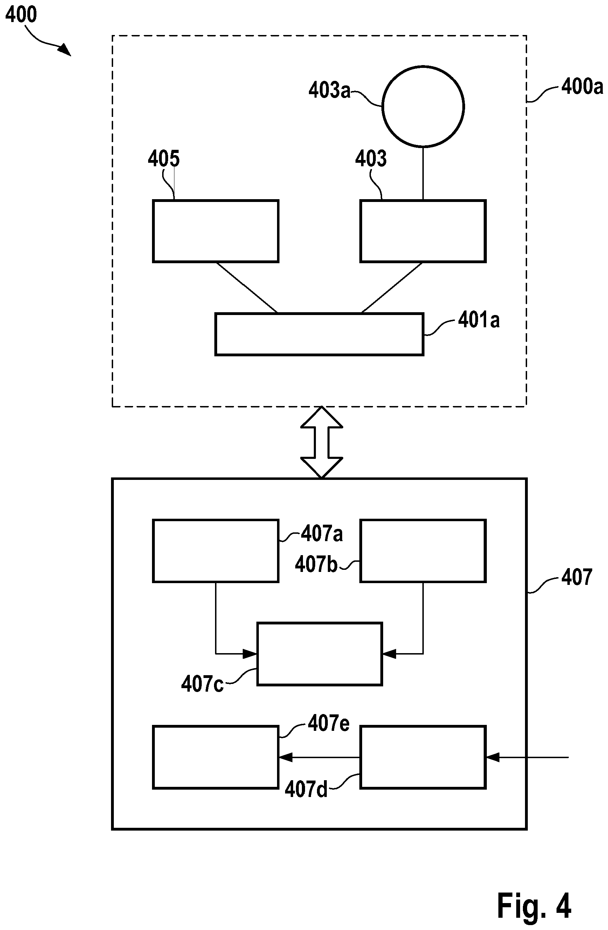

Fig. 4 zeigt in Art eines Blockschaltbildes eine beispielhafte Antriebsvorrichtung 400 einer Anordnung 400a aus zwei einer Plattform 401a zugeordneten Körpern 403, 405, von denen der Körper 403 mit einem Antrieb 403a versehen ist. Die Antriebsvorrichtung 400 umfasst eine Analyse- und Steuereinheit 407 zur Schwingungsanalyse und -beeinflussung sowie Kraftanalyse und -steuerung und/oder Bewegungsbahnanalyse und -steuerung der Körper 403, 405, wobei die Analyse- und Steuereinheit 407 ein Schwingungsanalysemodul 407a und ein Kraftanalysemodul 407b umfasst, die zur Schwingungs- bzw. Kraftanalyse auf der Basis von trägen Punktmassen ausgebildet sind.

Die Analyse- und Steuermittel 407 umfassen des Weiteren eine eingangsseitig mit dem Schwingungsanalysemodul 407a und dem Kraftanalysemodul 407b verbundene Lastwechsel-Modellierungseinheit 407c, die zur Modellierung einer Lastveränderung automatisch bei einem Lastwechsel in der Anordnung 400a ausgebildet ist. Weiterhin weist die Analyse- und Steuereinheit 407 eine Speichereinheit 407d zur Speicherung vorberechneter Parameter-Tabellen und eine mit der Speichereinheit verbundene Bewegungsbahn-Korrektureinheit 407e zur Ausführung von Bewegungsbahnkorrekturen während des Bewegungsablaufs der Körper aufgrund der vorberechneten und gespeicherten Parameter-Tabellen auf.

Die Funktionen der Komponenten der in Fig. 4 schematisch gezeigten Anordnung ergeben sich für den Fachmann aus den obigen Erläuterungen, so dass von einer genaueren Beschreibung hier Abstand genommen werden kann.

Im Übrigen ist die Ausführung der Erfindung auch in einer Vielzahl von Abwandlungen der hier gezeigten Beispiele und weiter oben hervorgehobenen Aspekte der Erfindung möglich. Der Schutzumfang wird durch die Ansprüche bestimmt.

## Patentansprüche

1. Vorrichtung zur Bewegungsanalyse (407) einer Anordnung (400a) aus mehreren einer Plattform zugeordneten Körpern (403;405), von denen wenigstens einer mit einem Antrieb (403a) versehen ist, insbesondere vom Hexapoden-Typ oder vom Gelenkarm-Typ, mit Mitteln zur Schwingungsanalyse und Kraftanalyse, wobei
die Vorrichtung in modularem Aufbau
ein Schwingungsanalysemodul (407a) zur analytischen Bestimmung von Eigenschwingungsmoden der Körper und/oder der Plattform hinsichtlich wenigstens einer der folgenden Größen: Frequenz, Drehmittelpunkt des Drehanteils der Schwingungen, Drehachse einer Drehschwingung, Verschiebungsvektor einer kartesischen Schwingung, Amplitudenverhältnis der Schwingungen zueinander,
ein Kraftanalysemodul (407b) zur analytischen Bestimmung der auf einer vorbestimmten Bahnkurve auftretenden Beschleunigungskräfte und/oder Gewichtskräfte und/oder Drehmomente hinsichtlich der Körper/und oder der Plattform aufweist,
**dadurch gekennzeichnet, dass**
das Schwingungsanalysemodul (407a) zur Schwingunganalyse und das Kraftanalysemodul (407b) zur Kraftanalyse jeweils auf der Basis von trägen Punktmassen ausgebildet ist und
die Vorrichtung eine Simulations-Verarbeitungseinheit, welche Ausgangswerte des Schwingungsanalysemoduls (407a) und des Kraftanalysemoduls (407b) zur Simulation von Bewegungsbahnen und wahlweise eines zugelassenen Bewegungsraumes der Körper bzw. der Plattform mit zugeordneten Körpern verarbeitet, aufweist.

2. Vorrichtung (407) nach Anspruch 1, wobei das Schwingungsanaly-semodul (407a) zur analytischen Bestimmung der Eigenschwingungen von Hexapoden und das Kraftanalysemodul (407b) als Beinlast-Modul zur analytischen Bestimmung der Beinlasten bzw. -kräfte der Beine von Hexapoden ausgebildet ist.

3. Vorrichtung (407) nach Anspruch 1, wobei das Schwingungsanalysemodul (407a) zur analytischen Bestimmung der Eigenschwingungen eines Gelenkarms und das Kraftanalysemodul (407b) als Gelenklast-Modul zur Bestimmung der Gelenklasten bzw. -kräfte der Gelenke eines Gelenk-arms ausgebildet ist.

4. Antriebsvorrichtung (400) einer Anordnung (400a) aus mehreren einer Plattform (401a) zugeordneten Körpern (403;405), von denen wenigstens einer mit einem Antrieb (403a) versehen ist, insbesondere vom Hexapoden-Typ oder vom Gelenkarm-Typ, mit Analyse- und Steuermitteln (407) zur Schwingungsanalyse und -beeinflussung und Kraftanalyse und -steuerung und/oder Bewegungsbahnanalyse und -steuerung,
wobei die Analyse- und Steuermittel eine Vorrichtung nach einem der Ansprüche 1 bis 3 umfassen und zu einer Kraftanalyse vor Start eines Bewegungsablaufs und zur Bewegungsanalyse während eines Bewegungsablaufs der Körper ausgebildet sind.

5. Antriebsvorrichtung (400) nach Anspruch 4, wobei die Analyse- und Steuermittel (407) eine Lastwechsel-Modellierungseinheit (407c) aufweisen, die eingangsseitig mit dem Kraftanalysemodul (407b) und optional dem Schwingungsanalysemodul (407a) verbunden und zur Modellierung einer Lastfalländerung aufgrund einer entsprechenden Eingabe durch einen Bediener oder automatisch bei einem Lastwechsel in der Anordnung (400a) ausgebildet ist.

6. Antriebsvorrichtung (400) nach Anspruch 4 oder 5, wobei die Analyse- und Steuermittel (407) eine Speichereinheit (407d) zur Speicherung vorberechneter Parameter-Tabellen in Art von Lookup-Tables und eine mit der Speichereinheit verbundene Bewegungsbahn-Korrektureinheit (407e) zur Ausführung von Bewegungsbahnkorrekturen während des Bewegungsablaufs der Körper aufgrund der vorberechneten und gespeicherten Parameter-Tabellen aufweisen.

7. Antriebsvorrichtung (400) nach einem der Ansprüche 4 bis 6, ausgebildet als Antriebsvorrichtung eines parallelen oder hybriden Roboters mit mindestens einem Gelenkarm, welche einen Regler einschließt, der mit Ausgängen des Schwingungsanalysemoduls (407a) und des Kraftanalysemoduls (407b) verbunden ist und in dem eine Reglerparametrierung aufgrund von Ausgangsdaten dieser Module implementiert ist.

8. Bearbeitungsanordnung, insbesondere Werkzeugmaschine, mit einer Antriebsvorrichtung (400) nach einem der Ansprüche 5 bis 7 zur Bewegung eines Werkzeugs relativ zu einem Werkstück.

9. Verfahren zur Bewegungsanalyse einer Anordnung (400a) aus mehreren einer Plattform (401a) zugeordneten Körpern (403;405), von denen wenigstens einer mit einem Antrieb (403a) versehen ist, insbesondere vom Hexapoden-Typ oder vom Gelenkarm-Typ, wobei
die Bewegungsanalyse
eine analytische Bestimmung von Eigenschwingungsmoden der Körper
und/oder der Plattform hinsichtlich wenigstens eines der folgenden Größen:
Frequenz, Drehmittelpunkt des Drehanteils der Schwingungen, Drehachse einer Drehschwingung, Verschiebungsvektor einer kartesischen Schwingung und Amplitudenverhältnis der Schwingungen zueinander in einem Schwingungsanalysemodul,
eine analytische Bestimmung der auf einer vorbestimmten Bahnkurve auftretenden Beschleunigungskräfte und/oder Gewichtskräfte und/oder Drehmomente hinsichtlich der Körper/und oder der Plattform in einem Kraftanalysemodul umfasst,
**dadurch gekennzeichnet, dass**
die analytische Bestimmung der Eigenschwingungsmoden und die analytische Bestimmung der Beschleunigungskräfte und/oder Gewichtskräfte und/oder Drehmomente auf der Basis von trägen Punktmassen ausgeführt wird und das Verfahren einen Simulationsschritt umfasst, welcher Ausgangswerte des Schwingungsanalysemoduls (407a) und des Kraftanalysemoduls (407b) zur Simulation von Bewegungsbahnen der Körper bzw. der Plattform mit zugeordneten Körpern verarbeitet.

10. Verfahren nach Anspruch 9, wobei die analytische Bestimmung als Bestimmung der Eigenschwingungen von Hexapoden und die Kraft-analyse als analytische Bestimmung der Beinlasten bzw. -kräfte der Beine von Hexapoden ausgeführt wird.

11. Antriebssteuerverfahren einer Anordnung (400a) aus mehreren einer Plattform (401a) zugeordneten Körpern (403;405), von denen zumindest einer mit einem Antrieb (403a) versehen ist, insbesondere vom Hexapoden-Typ oder vom Gelenkarm-Typ, welche eine Schwingungsanalyse und - beeinflussung, Kraftanalyse und -steuerung und/oder Bewegungsbahnanalyse und -steuerung umfasst, welches ein Verfahren nach Anspruch 9 oder 10 einschließt und zur Kraftanalyse vor Start eines Be-wegungsablaufs und zur Bewegungsanalyse während eines Bewegungsab-laufs der Körper ausgebildet ist.

12. Antriebssteuerverfahren nach Anspruch 11, welches eine Lastwechsel-Modellierung aufweist, die unter Nutzung von Ausgangswerten des Kraftanalysemoduls (407b) und optional des Schwingungsanalysemoduls (407a) und aufgrund einer entsprechenden Eingabe durch einen Bediener oder automatisch bei einem Lastwechsel in der Anordnung (400a) ausgeführt wird.

13. Antriebssteuerverfahren nach Anspruch 11 oder 12, welches eine Speicherung vorberechneter Parameter-Tabellen in Art von Lookup-Tables in einer Speichereinheit (407d) und eine Ausführung von Bewegungsbahn-korrekturen während des Bewegungsablaufs der Körper aufgrund der vorberechneten und gespeicherten Parameter-Tabellen aufweist.

14. Antriebssteuerverfahren nach Anspruch 11, ausgebildet als Antriebssteuerverfahren eines parallelen oder hybriden Roboters mit mindestens einem Gelenkarm, welches eine Reglerparametrierung aufgrund von Ausgangsdaten des Schwingungsanalysemoduls und des Kraftanalysemoduls einschließt.

15. Steuerungsverfahren einer Bearbeitungsanordnung, insbesondere einer Werkzeugmaschine, welches ein Antriebssteuerverfahren nach einem der Ansprüche 11 bis 14 zur Steuerung einer Relativbewegung eines Werkzeugs relativ zu einem Werkstück umfasst.

## Claims

1. A device for analysing the movement (407) of an arrangement (400a) of a plurality of bodies (403; 405) associated with a platform, at least one of which is provided with a drive (403a), in particular of the hexapod type or of the articulated arm type, with means for analysing oscillation and force, wherein
the device having, in a modular structure
a vibration analysis module (407a) for the analytical determination of natural vibration modes of the bodies and/or the platform with respect to at least one of the following quantities: frequency, centre of rotation of the rotational component of the vibrations, axis of rotation of a rotational vibration, displacement vector of a Cartesian vibration, amplitude ratio of the vibrations to one another,
a force analysis module (407b) for analytically determining the acceleration forces and/or weight forces and/or torques occurring on a predetermined path curve with respect to the bodies and/or the platform,
**characterised in that**
**in that**
the vibration analysis module (407a) for vibration analysis and the force analysis module (407b) for force analysis are each designed on the basis of inertial point masses, and
the device comprises a simulation processing unit which processes output values of the vibration analysis module (407a) and of the force analysis module (407b) for the simulation of trajectories and, optionally, of an authorised movement space of the bodies and/or of the platform with associated bodies. of the platform with associated bodies.

2. The device (407) according to claim 1, wherein the vibration analysis module (407a) is designed for the analytical determination of the natural vibrations of hexapods and the force analysis module (407b) is designed as a leg load module for the analytical determination of the leg loads or forces of the legs of hexapods.

3. The device (407) according to claim 1, wherein the vibration analysis module (407a) is designed for the analytical determination of the natural vibrations of a joint arm and the force analysis module (407b) is designed as a joint load module for determining the joint loads or forces of the joints of a joint arm.

4. A drive device (400) of an arrangement (400a) of a plurality of bodies (403; 405) associated with a platform (401a), at least one of which is provided with a drive (403a), in particular of the hexapod type or of the articulated arm type, with analysis and control means (407) for analysing and influencing vibrations and analysing and controlling forces and/or analysing and controlling the path of movement,
wherein the analysing and control means comprise a device according to one of claims 1 to 3 and are designed for force analysis before the start of a movement sequence and for movement analysis during a movement sequence of the bodies.

5. The drive device (400) according to claim 4, wherein the analysis and control means (407) comprise a load change modelling unit (407c) connected on the input side to the force analysis module (407b) and optionally to the vibration analysis module (407a) and adapted to model a load case change based on a corresponding input by an operator or automatically upon a load change in the arrangement (400a).

6. The drive device (400) according to claim 4 or 5, wherein the analysing and control means (407) comprise a memory unit (407d) for storing precalculated parameter tables in the form of look-up tables and a trajectory correction unit (407e) connected to the memory unit for executing trajectory corrections during the movement of the bodies on the basis of the precalculated and stored parameter tables.

7. The drive device (400) according to one of claims 4 to 6, designed as a drive device of a parallel or hybrid robot with at least one articulated arm, which includes a controller which is connected to outputs of the vibration analysis module (407a) and the force analysis module (407b) and in which a controller parameterisation is implemented on the basis of output data of these modules.

8. A machining arrangement, in particular machine tool, with a drive device (400) according to one of claims 5 to 7 for moving a tool relative to a workpiece.

9. A method for analysing the movement of an arrangement (400a) of a plurality of bodies (403; 405) associated with a platform (401a), at least one of which is provided with a drive (403a), in particular of the hexapod type or of the articulated arm type, wherein
the motion analysis comprises
an analytical determination of natural vibration modes of the bodies and/or
the platform with respect to at least one of the following variables:
frequency, centre of rotation of the rotational part of the vibrations, axis of rotation of a rotational vibration, displacement vector of a Cartesian vibration and amplitude ratio of the vibrations to each other in a vibration analysis module,
an analytical determination of the acceleration forces and/or weight forces and/or torques occurring on a predetermined path curve with respect to the bodies and/or the platform in a force analysis module,
**characterised in that**
the analytical determination of the natural vibration modes and the analytical determination of the acceleration forces and/or weight forces and/or torques is carried out on the basis of inertial point masses and
the method comprises
a simulation step which processes output values of the vibration analysis module (407a) and the force analysis module (407b) to simulate trajectories of the bodies or the platform with associated bodies.

10. The method according to claim 9, wherein the analytical determination is carried out as a determination of the natural vibrations of hexapods and the force analysis is carried out as an analytical determination of the leg loads or forces of the legs of hexapods.

11. A drive control method of an arrangement (400a) of a plurality of bodies (403; 405) associated with a platform (401a), at least one of which is provided with a drive (403a), in particular of the hexapod type or of the articulated arm type, which comprises a vibration analysis and control, force analysis and control and/or movement path analysis and control, which includes a method according to claim 9 or 10 and is designed for force analysis before the start of a movement sequence and for movement analysis during a movement sequence of the bodies.

12. The drive control method according to claim 11, comprising a load change modelling performed using output values of the force analysis module (407b) and optionally the vibration analysis module (407a) and based on a corresponding input by an operator or automatically upon a load change in the arrangement (400a).

13. The drive control method according to claim 11 or 12, comprising a storage of precalculated parameter tables in the form of lookup tables in a memory unit (407d) and an execution of movement path corrections during the movement sequence of the bodies on the basis of the precalculated and stored parameter tables.

14. The drive control method according to claim 11, designed as a drive control method of a parallel or hybrid robot with at least one articulated arm, which includes a controller parameterisation based on output data of the vibration analysis module and the force analysis module.

15. A control method of a machining arrangement, in particular of a machine tool, which comprises a drive control method according to one of claims 11 to 14 for controlling a relative movement of a tool relative to a workpiece.

## Revendications

1. Dispositif d'analyse de déplacement (407) d'un agencement (400a) composé de plusieurs corps (403 ; 405) associés à une plateforme, dont au moins un est pourvu d'un entraînement (403a), en particulier du type hexapode ou du type bras articulé, avec des moyens pour l'analyse de vibrations et l'analyse de force, sachant que
le dispositif présente, en structure modulaire,
un module d'analyse de vibrations (407a) pour la détermination analytique de modes de vibrations propres des corps et/ou de la plateforme eu égard à au moins une des grandeurs suivantes : fréquence, centre de rotation de la composante rotative des vibrations, axe de rotation d'une vibration rotative, vecteur de translation d'une vibration cartésienne, rapport d'amplitude des vibrations les unes par rapport aux autres,
un module d'analyse de force (407b) pour la détermination analytique des forces d'accélération et/ou forces de gravité et/ou couples de rotation survenant sur une courbe de trajectoire prédéterminée eu égard aux corps et/ou à la plateforme,
**caractérisé en ce que**
le module d'analyse de vibrations (407a) est constitué pour l'analyse de vibrations et le module d'analyse de force (407b) pour l'analyse de force respectivement sur la base de masses ponctuelles inertes et
le dispositif présente une unité de traitement de simulation, laquelle traite des valeurs de sortie du module d'analyse de vibrations (407a) et du module d'analyse de force (407b) pour la simulation de trajectoires de déplacement et au choix d'un espace de déplacement autorisé des corps ou de la plateforme avec des corps associés.

2. Dispositif (407) selon la revendication 1, sachant que le module d'analyse de vibrations (407a) est constitué pour la détermination analytique des vibrations propres d'hexapodes et le module d'analyse de force (407b) en tant que module de charge de jambe pour la détermination analytique des charges ou forces de jambe des jambes d'hexapodes.

3. Dispositif (407) selon la revendication 1, sachant que le module d'analyse de vibrations (407a) est constitué pour la détermination analytique des vibrations propres d'un bras articulé et le module d'analyse de force (407b) en tant que module de charge d'articulation pour la détermination des charges ou forces d'articulation des articulations d'un bras articulé.

4. Dispositif d'entraînement (400) d'un agencement (400a) composé de plusieurs corps (403 ; 405) associés à une plateforme(401a), dont au moins un est pourvu d'un entraînement (403a), en particulier du type hexapode ou du type bras articulé, avec des moyens d'analyse et de commande (407) pour l'analyse et l'influence de vibrations et l'analyse et la commande de force et/ou l'analyse et la commande de trajectoire de déplacement,
sachant que les moyens d'analyse et de commande comprennent un dispositif selon l'une des revendications 1 à 3 et sont constitués pour une analyse de force avant démarrage d'un cycle de déplacement et pour l'analyse de déplacement pendant un cycle de déplacement des corps.

5. Dispositif d'entraînement (400) selon la revendication 4, sachant que les moyens d'analyse et de commande (407) présentent une unité de modélisation de changement de charge (407c) qui est reliée côté entrée au module d'analyse de force (407b) et facultativement au module d'analyse de vibrations (407a) et est constituée pour la modélisation d'une modification de cas de charge sur la base d'une saisie correspondante par un opérateur ou automatiquement en cas de changement de charge dans l'agencement (400a).

6. Dispositif d'entraînement (400) selon la revendication 4 ou 5, sachant que les moyens d'analyse et de commande (407) présentent une unité d'enregistrement (407d) pour l'enregistrement de tableaux de paramètres précalculés sous forme de tables de correspondance et une unité de correction de trajectoire de déplacement (407e) reliée à l'unité d'enregistrement pour l'exécution de corrections de trajectoire de déplacement pendant le cycle de déplacement des corps sur la base des tableaux de paramètres précalculés et enregistrés.

7. Dispositif d'entraînement (400) selon l'une des revendications 4 à 6, constitué comme dispositif d'entraînement d'un robot parallèle ou hybride avec au moins un bras articulé, lequel inclut un régulateur qui est relié à des sorties du module d'analyse de vibrations (407a) et du module d'analyse de force (407b) et dans lequel un paramétrage de régulateur est implémenté sur la base de données de sortie.

8. Agencement de traitement, en particulier machine-outil, avec un dispositif d'entraînement (400) selon l'une des revendications 5 à 7 pour le déplacement d'un outil par rapport à une pièce à usiner.

9. Procédé d'analyse de déplacement (400a) d'un agencement (400a) composé de plusieurs corps (403 ; 405) associés à une plateforme (401a), dont au moins un est pourvu d'un entraînement (403a), en particulier du type hexapode ou du type bras articulé, sachant que
l'analyse de déplacement comprend
une détermination analytique de modes de vibrations propres des corps et/ou de la plateforme eu égard à au moins une des grandeurs suivantes : fréquence, centre de rotation de la composante rotative des vibrations, axe de rotation d'une vibration rotative, vecteur de translation d'une vibration cartésienne et rapport d'amplitude des vibrations les unes par rapport aux autres dans un module d'analyse de vibrations,
une détermination analytique des forces d'accélération et/ou forces de gravité et/ou couples de rotation survenant sur une courbe de trajectoire prédéterminée eu égard aux corps et/ou à la plateforme dans un module d'analyse de force,
**caractérisé en ce que**
la détermination analytique des modes de vibrations propres et la détermination analytique des forces d'accélération et/ou forces de gravité et/ou couples de rotation sont effectuées sur la base de masses ponctuelles inertes et
le procédé comprend une étape de simulation, laquelle traite des valeurs de sortie du module d'analyse de vibrations (407a) et du module d'analyse de force (407b) pour la simulation de trajectoires de déplacement des corps ou de la plateforme avec des corps associés.

10. Procédé selon la revendication 9, sachant que la détermination analytique est exécutée comme détermination des vibrations propres d'hexapodes et l'analyse de force comme détermination analytique des charges ou forces de jambe des jambes d'hexapodes.

11. Procédé de commande d'entraînement d'un agencement (400a) composé de plusieurs corps (403 ; 405) associés à une plateforme (401a), dont au moins un est pourvu d'un entraînement (403a), en particulier du type hexapode ou du type bras articulé, lequel comprend une analyse et une influence de vibrations, une analyse et une commande de force et/ou une analyse et une commande de trajectoire de déplacement, lequel inclut un procédé selon la revendication 9 ou 10 et est constitué pour l'analyse de force avant démarrage d'un cycle de déplacement et pour l'analyse de déplacement pendant un cycle de déplacement des corps.

12. Procédé de commande d'entraînement selon la revendication 11, lequel présente une modélisation de changement de charge qui est exécutée moyennant des valeurs de sortie du module d'analyse de force (407b) et facultativement du module d'analyse de vibrations (407a) et sur la base d'une saisie correspondante par un opérateur ou automatiquement en cas de changement de charge dans l'agencement (400a).

13. Procédé de commande d'entraînement selon la revendication 11 ou 12, lequel présente un enregistrement de tableaux de paramètres précalculés sous forme de tables de correspondance dans une unité d'enregistrement (407d) et une exécution de corrections de trajectoire de déplacement pendant le cycle de déplacement des corps sur la base des tableaux de paramètres précalculés et enregistrés.

14. Procédé de commande d'entraînement selon la revendication 11, constitué comme procédé de commande d'entraînement d'un robot parallèle ou hybride avec au moins un bras articulé, lequel inclut un paramétrage de régulateur sur la base de données de sortie du module d'analyse de vibrations et du module d'analyse de force.

15. Procédé de commande d'un agencement de traitement, en particulier d'une machine-outil, lequel comprend un procédé de commande d'entraînement selon l'une des revendications 11 à 14 pour la commande d'un déplacement relatif d'un outil par rapport à une pièce à usiner.
